# EUROPEAN PATENT APPLICATION

(11) **EP 0 850 820 A1**
(43) Date of publication of application: **01.07.1998**
(21) Application number: 97120588.5
(22) Date of filing: 25.11.1997
(51) Int. Cl.: B62D 25/18, B62D 25/16

(54) **A unit for supporting the front mudguard of an agricultural tractor**

(30) Priority: 27.11.1996 IT TO960240 U
(71) Applicant: SAME DEUTZ-FAHR S.P.A., 24047 Treviglio (Bergamo) (IT)
(72) Inventor: Martinetti, Aldo, 24047 Treviglio (Bergamo) (IT)
(74) Representative: Quinterno, Giuseppe

(57) **Abstract**

A unit for supporting the front mudguard of a tractor comprises a base (18) which is fixed to a stub axle (12) and from which a pivot pin (20) projects, a sleeve (24), fixed to a structure (26) carrying the mudguard (28), being mounted rotatably on the pivot pin (20). The support unit comprises a helical tension spring (28) having a first end anchored to the base (18) and a second end anchored to a first arm (30) fixed to the sleeve (24). A second arm (38) also fixed to the sleeve (24) extends substantially in the opposite direction to the first arm (30) and carries a stop abutment (44) which cooperates with a corresponding stop abutment (40) provided on the front axle (10) in the region of the stub axle (12).

## Description

The present invention relates to a unit for supporting the front mudguard of an agricultural tractor.

More precisely, the invention relates to a support unit of the type in which the mudguard follows the rotary movement of the stub axle for a predetermined range of steering angles and in which, for steering angles larger than a predetermined value, the mudguard is stopped in order to prevent it from striking parts of the tractor which could be damaged, such as, for example, bodywork panels.

A support unit of this type is described in German patent application No. 36 07 000. The main advantage of support units of this type is that the same steering angle is achieved for tractors with front mudguards as for those without front mudguards. This improves the manoeuvrability of tractors having front mudguards and, at the same time, enables the mudguard also to be mounted on tractor models which initially did not have mudguards, without adversely affecting manoeuvrability and ensuring improved working conditions by virtue of the protection which the mudguard forms against dirt raised by the wheel in motion.

The mudguard support unit known from the aforementioned German application No. 36 07 000 comprises a base which is fixed to a stub axle and from which a pivot pin projects, a sleeve, fixed to a structure carrying the mudguard, being mounted rotatably on the pivot pin. A helical compression spring having a guide rod of adjustable length is interposed between the sleeve and the base. An adjustment screw, for setting the relative positions of the mudguard structure and of the stub axle in rest conditions, is arranged parallel to the guide rod. A second threaded member enables the stop position of the mudguard to be set.

The object of the present invention is to provide a support unit of the type specified above which is simpler and cheaper and which requires fewer adjustment operations than that described in the aforementioned German application No. 36 07 000.

According to the present invention, this object is achieved by a support unit having the characteristics forming the subject of the main claim.

Further characteristics and advantages of the present invention will become clear in the course of the following detailed description, given purely by way of non-limiting example with reference to the appended drawings, in which:
Figure 1 is a front elevational view of the support unit according to the present invention,
Figure 2 is a side view taken on the arrow II of Figure 1, and
Figure 3 is a section taken on the line III-III of Figure 1.

With reference to the drawings, the front axle, indicated 10, of an agricultural tractor carries, at each of its ends, a stub axle 12 to which a wheel 14 is fixed. The stub axle 12 can pivot relative to the axle 10 about a steering axis 16. The mechanism which controls the steering of the stub axle 12 is of conventional type and has not been illustrated since it falls outside the scope of the present invention. For tractors which also have front wheel drive, there is a reduction unit, also of conventional type, inside the stub axle 12.

Fixed to the stub axle 12 is a base 18 to which a pin 20, the axis 22 of which is inclined sightly to the steering axis 16, is welded. A sleeve 24 is mounted rotatably on the pin 20 and a structure 26 carrying the mudguard 28 of the wheel 14 is fixed thereto.

The base 18 has a flange 26 to which a first end of a helical tension spring 28 is anchored. The second end of the spring 28 is anchored to a first arm 30 fixed to the sleeve 24. The base 18 has a second flange 32 constituting an abutment against which the arm 30 bears in normal conditions under the effect of the biasing force exerted by the spring 28.

The flange 32 which acts as an abutment for the first arm 30 also serves, together with an opposed flange 34, for supporting a cover plate 36 which protects the spring 28 from mud and dirt in general.

A second arm 38 is fixed to the sleeve 24 and cooperates with an adjustable stop abutment 40 carried by the front axle 10. The stop abutment 40 comprises a screw 42 for abutment by an appendage 44 of the second arm 38.

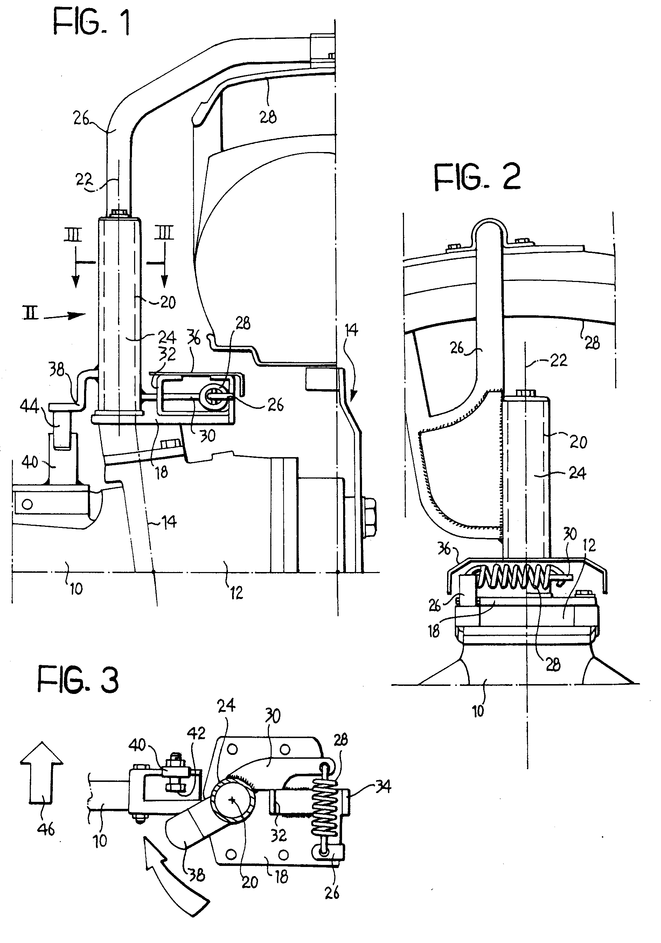

The operation of the support unit according to the present invention will now be described with reference to Figure 3, in which the direction of forward movement of the tractor is indicated by the arrow 46. During the steering movement, the stub axle 12 moves angularly relative to the front axle 10 about the axis 16.

As long as the steering angle of the wheels is within a predetermined range corresponding to normal operation, the spring 28 keeps the first arm 30 in contact with the abutment 32. In this situation, the sleeve 24, the support structure 26 and the mudguard 28 move together with the pin 20, and thus the mudguard 28 follows the steering movement of the wheel 14.

If the steering of the wheel 14 continues in the sense indicated by the arrow 48, a predetermined steering angle is reached at which the appendage 44 of the second arm 38 stops against the screw 42 of the abutment 40. At this point, if steering continues in the sense indicated by the arrow 48, the stub axle 12 and the wheel 14 continue their steering movement whilst the sleeve 24 and the mudguard 28 remain stationary. A relative rotation is thus brought about between the pin 20 and the sleeve 24. The steering angle at which the rotary movement of the mudguard 28 is stopped can be varied by means of the adjustment screw 42 and is determined so as to prevent the mudguard 28 from striking other parts of the tractor such as, for example, bodywork panels or the like. The system can thus give rise to partial steering of the mudguard, preventing it from damaging parts of the bodywork with very large steering angles. The danger of the mudguard striking the bodywork generally arises only when the wheel is on the inside of a curve since, for reasons of kinematics, the inner wheel has to be steered by a larger angle than the wheel on the outside of the curve. When the steering angle of the wheel returns to the normal operating range, the spring 28 returns the mudguard 28 to a position in which it is aligned with the wheel 14.

## Claims

1. A unit for supporting the front mudguard of a tractor, comprising a base (18) which is fixed to a stub axle (12) and from which a pivot pin (20) projects, a sleeve (24), fixed to a structure (26) carrying the mudguard (28), being mounted rotatably on the pivot pin (20), the mudguard support unit also comprising resilient means (28) and stop means (32, 42) arranged in a manner such that the mudguard (28) follows the steering movement of the wheel for a predetermined range of steering angles, and that, for steering angles larger than a predetermined value, the mudguard stops without hindering further steering of the wheel, characterized in that it comprises a helical tension spring (28) having a first end anchored to the base and a second end anchored to a first arm (30) fixed to the sleeve (24), a second arm (38), which is fixed to the sleeve (24) and extends substantially in the opposite direction to the first arm (30), carrying a stop abutment (44) which cooperates with a corresponding stop abutment (40, 42) provided on the front axle (10) in the region of the stub axle (12).

2. A support unit according to Claim 1, characterized in that the base (18) has a flange (32) which constitutes a stop abutment for the first arm (30) and with which the first arm (30) is kept in abutment by the biasing force of the spring (28), the flange (32) also serving for the fixing of a cover plate (34) for protecting the spring (28) from mud and dirt in general.
